# EUROPÄISCHE PATENTSCHRIFT

(11) **EP 3 600 824 B1**
(45) Veröffentlichungstag und Bekanntmachung des Hinweises auf die Patenterteilung: **30.11.2022**
(21) Anmeldenummer: 18711281.8
(22) Anmeldetag: 12.03.2018
(51) Int. Cl.: B29C 48/50, B29C 48/56, B29C 48/68

(54) **EINSCHNECKENEXTRUDER ZUR KUNSTSTOFFPLASTIFIZIERUNG**
SINGLE SCREW EXTRUDER FOR PLASTICIZATION OF PLASTIC
EXTRUDEUSE MONOVIS SERVANT À LA PLASTIFICATION DE MATIÈRE PLASTIQUE

(30) Priorität: 23.03.2017 DE 102017204933; 02.05.2017 DE 102017207357
(43) Veröffentlichungstag der Anmeldung: 05.02.2020
(73) Patentinhaber: Helix GmbH, 71364 Winnenden (DE)
(72) Erfinder: WEINBRENNER, Armin, 71566 Althütte (DE)
(74) Vertreter: Patentanwälte Ruff, Wilhelm, Beier, Dauster & Partner mbB
(86) Internationale Anmeldenummer: PCT/EP2018/056013
(87) Internationale Veröffentlichungsnummer: WO 2018/172112

(56) Entgegenhaltungen:
- CN-A- 103 722 719
- DE-A1- 19 928 870
- US-A- 3 944 191
- US-A- 4 136 969

## Beschreibung

Die Erfindung betrifft einen Einschneckenextruder zur Kunststoffplastifizierung.

Ein solcher Einschneckenextruder ist aus der US 3,944,191 A bekannt. Der Einschneckenextruder weist eine zylindrische Schnecke sowie einen Zylinder auf, der mit einer Einzugszone, einer Übergangszone und einer Plastifizierzone versehen ist. In einer Ausführungsform weist die Einzugszone Nuten auf.

Ein weiterer Einschneckenextruder ist aus der DE 199 28 870 A1 bekannt. Der bekannte Einschneckenextruder ist zur Kunststoffplastifizierung vorgesehen und weist einen Zylinder auf, der mit einer Einzugszone versehen ist. In der Einzugszone wird das zu plastifizierende Kunststoffmaterial zugeführt. An die Einzugszone schließt in Förderrichtung eine Plastifizierzone an, in der das Kunststoffmaterial plastifiziert wird. Den Zylinder durchsetzt eine zylindrische Schnecke, die sich durch die Einzugszone und die Plastifizierzone hindurch erstreckt. Die Einzugszone des Zylinders ist mit Axialnuten versehen, die in einer Nutbuchse vorgesehen sind, die eine Wandung der Einzugszone bildet. Zur Verbesserung der Leistungsfähigkeit des Extruders wird als zylindrische Schnecke eine Barriereschnecke eingesetzt.

Aufgabe der Erfindung ist es, einen Einschneckenextruder der eingangs genannten Art zu schaffen, der für unterschiedliche Kunststoffmaterialien einen hohen spezifischen Durchsatz bei dennoch guter Plastifizierung ermöglicht, der auch bei sehr hohen Schneckendrehzahlen erhalten bleibt.

Diese Aufgabe wird durch die Merkmale des Anspruchs 1 gelöst. Durch die erfindungsgemäße Vergrößerung des Nenndurchmessers der Einzugszone und demzufolge einem gegenüber der Plastifizierzone vergrößerten Ringspalt zwischen dem Nenndurchmesser der Schnecke und dem Nenndurchmesser der Einzugszone ergibt sich überraschenderweise eine Erhöhung des spezifischen Durchsatzes für den Einschneckenextruder. Dieser hohe Durchsatz bleibt auch bei hohen Schneckenumfangsgeschwindigkeiten, d.h. bei einem schnelllaufenden Einschneckenextruder, erhalten. Vorteilhaft ergibt sich zudem für unterschiedliche Kunststoffmaterialien mit verschiedener Schüttdichte eine Stabilisierung und Homogenisierung des spezifischen Durchsatzes. Unter schnell laufenden Einschneckenextrudern sind Einschneckenextruder zu verstehen, deren Schneckenumfangsgeschwindigkeit wenigstens 0,5 m/s oder mehr beträgt, insbesondere bis wenigstens zu 1,8 m/s als Umfangsgeschwindigkeit einer Schnecke eines entsprechend schnelllaufenden Einschneckenextruders. Der erfindungsgemäße Einschneckenextruder eignet sich sowohl zur Plastifizierung von Neuware wie Kunststoffgranulat oder Kunststoffpellets als auch zur Plastifizierung von Kunststoff-Altware wie Mahlgut. In besonders vorteilhafter Weise eignet sich der erfindungsgemäße Einschneckenextruder für die Plastifizierung von Mahlgut, das naturgemäß eine wesentlich geringere Schüttdichte aufweist als Neuware. Mahlgut ist vorzugsweise Recycling-Material. Der Ringspalt im Bereich der Einzugszone ist vorzugsweise wenigstens um den Faktor 15 und besonders vorteilhaft wenigstens um den Faktor 20 größer als der Ringspalt im Bereich der Plastifizierzone.

Erfindungsgemäß ist zwischen der Einzugszone und der Plastifizierzone des Zylinders eine sich zur Plastifizierzone hin konisch verjüngende Übergangszone vorgesehen, deren Wandung zumindest abschnittsweise mit Nuten versehen ist, die der konischen Verjüngung nachgeführt sind. Auch diese erfindungsgemäße Lösung erhöht gegenüber dem Stand der Technik den spezifischen Durchsatz des Einschneckenextruders sowohl bei geringen als auch bei hohen Drehzahlen. Besonders vorteilhaft wird der erfindungsgemäße Einschneckenextruder mit schnelllaufenden Schnecken mit entsprechenden Schneckenumfangsgeschwindigkeiten von wenigstens 0,5 m/s eingesetzt. In gleicher Weise wie zuvor beschrieben eignet sich der Einschneckenextruder sowohl zur Plastifizierung von Neuware als auch von Altware. Die erfindungsgemäße Lösung kann vorteilhaft auch mit der im vorhergehenden Absatz beschriebenen Lösung kombiniert sein.

Unter der Nachführung der Nuten entsprechend der konischen Verjüngung ist eine Herstellung der Nuten durch eine Nachstellung eines Werkzeugs, das die Nuten einbringt, entsprechend der konischen Verjüngung bzw. konischen Aufweitung (auf eine Richtung entgegen der Förderrichtung bezogen) der Übergangszone zu verstehen. Das heißt, dass sich die Tiefe der Nuten als wichtiges Funktionsmaß dann auf den jeweiligen sich konisch ändernden Durchmesser des Zylinders bezieht. Beide Lösungen, einzeln oder kombiniert, gewährleisten einen zuverlässigen Einzug von Materialien mit geringer Schüttdichte in nahezu vergleichbarem Maß wie Neuware, so dass ein erfindungsgemäßer Einschneckenextruder materialunabhängig eine Homogenisierung und Stabilisierung des spezifischen Durchsatzes ermöglicht.

In Ausgestaltung der Erfindung weist die Schnecke im Betrieb des Einschneckenextruders eine Umfangsgeschwindigkeit von mehr als 0,5 m/s auf. Vorteilhaft ist die Schnecke eines entsprechenden schnelllaufenden Einschneckenextruders so auslegbar, dass sie Umfangsgeschwindigkeiten von bis zu wenigstens 1,8 m/s durchführen kann. Selbstverständlich ist ein entsprechender Antrieb des Einschneckenextruders so ausgelegt, dass die beschriebenen Schneckenumfangsgeschwindigkeiten im Betrieb des Einschneckenextruders auch erreicht werden können.

In weiterer Ausgestaltung der Erfindung ist die Wandung der Einzugszone zumindest abschnittsweise mit Nuten versehen. Dadurch ist eine weitere Erhöhung des spezifischen Durchsatzes des Einschneckenextruders erzielbar.

In weiterer Ausgestaltung der Erfindung ist die Wandung der Plastifizierzone zumindest abschnittsweise mit Nuten versehen. Die Nuten im Bereich der Einzugszone und/oder im Bereich der Übergangszone und/oder im Bereich der Plastifizierzone ermöglichen eine besonders homogene Plastifizierung bei gleichzeitig hohem Durchsatz des Einschneckenextruders.

In weiterer Ausgestaltung der Erfindung sind die Nuten als Axialnuten oder als Wendelnuten ausgeführt. Die Axialnuten erstrecken sich parallel zu einer Mittellängsachse des Zylinders und damit parallel zu einer Drehachse der Schnecke. Die Wendelnuten erstrecken sich schraubenförmig entlang der Wandungen der Einzugszone und/oder der Übergangszone und/oder der Plastifizierzone. Es ist auch möglich, Axialnuten im Bereich einer Zone mit Wendelnuten im Bereich einer anderen Zone zu kombinieren, wobei vorzugsweise die Nuten am Übergang zwischen jeweils zwei benachbarten Zonen fluchten und bündig ineinander übergehen.

In weiterer Ausgestaltung der Erfindung sind die Wendelnuten entgegengerichtet zu einer Wendelung der Schnecke gewendelt. Eine Steigung der Wendelnuten kann sich über eine Länge des Zylinders gesehen ändern oder unverändert bleiben.

In weiterer Ausgestaltung der Erfindung weisen die Wendelnuten eine betragsmäßig zu einer Schneckensteigung unterschiedliche oder gleiche Steigung auf.

In weiterer Ausgestaltung der Erfindung weisen die Nuten in der Übergangszone sich in Förderrichtung der Schnecke vertiefende Nutquerschnitte auf. Dabei vertiefen sich die Nuten insbesondere in Richtung der Plastifizierzone von 0 (Null) bis zu einer Tiefe des Nutquerschnitts, die einer Tiefe des Nutquerschnitts der Nuten im Bereich der Plastifizierzone entspricht. Alternativ vertiefen sich die Nuten ausgehend von einer Tiefe x > 0 in der Übergangszone zu der Plastifizierzone hin.

In weiterer Ausgestaltung der Erfindung weisen die Nuten trapez- oder rechteckförmige Nutquerschnitte auf. In weiterer Ausgestaltung der Erfindung sind die Nuten zumindest abschnittsweise mit runden Nutquerschnitten versehen.

In weiterer Ausgestaltung der Erfindung entspricht eine Länge der Übergangszone wenigstens einem Viertel eines Nenndurchmessers der Schnecke. Diese Ausgestaltung gewährleistet eine sichere Komprimierung und Aufschmelzung des Kunststoffmaterials in der Plastifizierzone auch bei hohen Durchsätzen. Die konisch gestaltete Übergangszone bietet eine Komprimierung nach Art eines Trichters.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in einer Längsschnittdarstellung einen Teilbereich einer Ausführungsform eines erfindungsgemäßen Einschneckenextruders mit einem Zylinderabschnitt und einem Schneckenabschnitt,
- Fig. 2: den Zylinderabschnitt des Einschneckenextruders nach Fig. 1,
- Fig. 3: in einer Längsschnittdarstellung gemäß Fig. 2 einen Zylinderabschnitt einer weiteren Ausführungsform eines erfindungsgemäßen Einschneckenextruders ähnlich Fig. 1,
- Fig. 4: einen Zylinder des Einschneckenextruders gemäß Fig. 3 in vollständiger Längsschnittdarstellung und
- Fig. 5: einen weiteren Zylinder einer weiteren Ausführungsform eines erfindungsgemäßen Einschneckenextruders ähnlich Fig. 4.

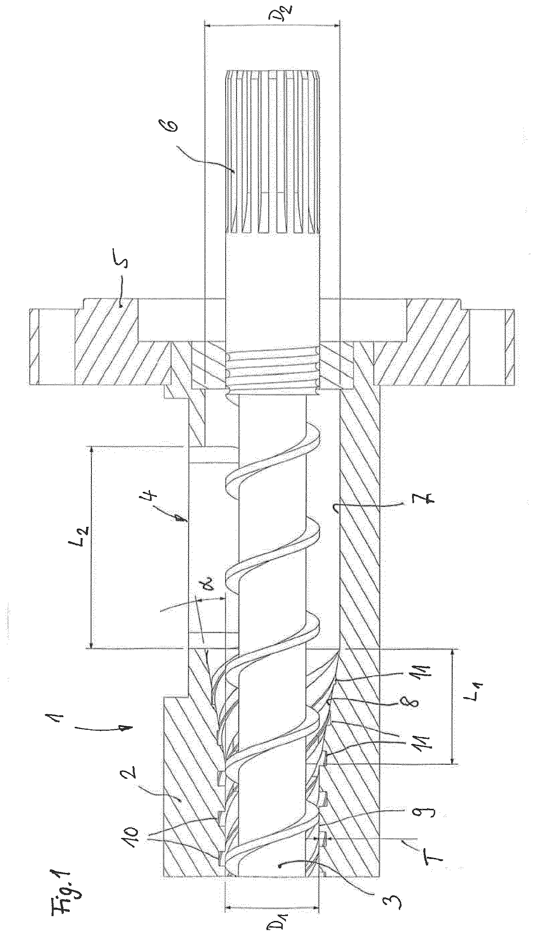

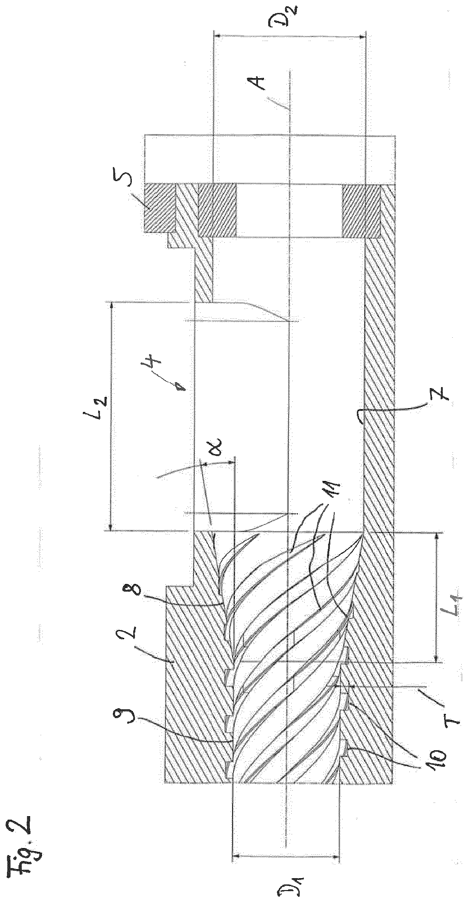

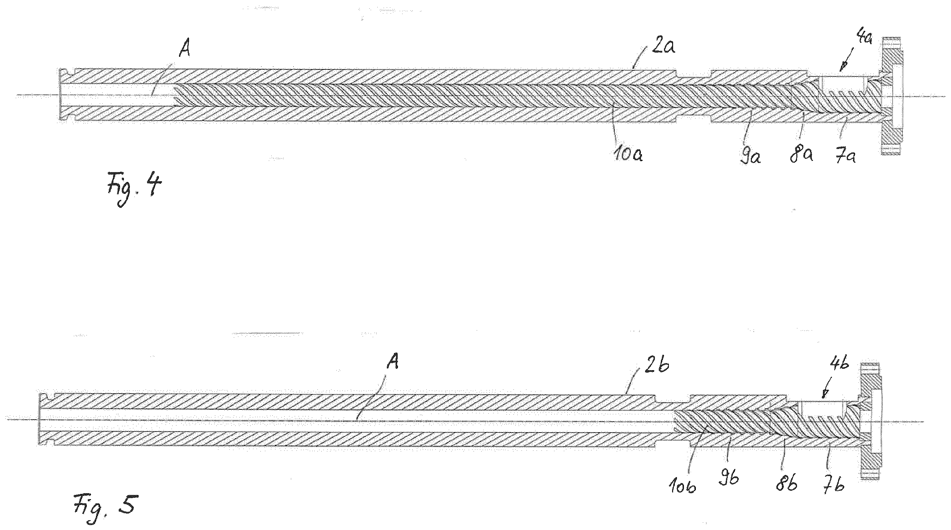

Ein Einschneckenextruder 1 nach den Fig. 1 und 2 ist zur Kunststoffplastifizierung vorgesehen. Der Einschneckenextruder 1 ist anhand der Fig. 1 und 2 lediglich abschnittsweise dargestellt. Der Einschneckenextruder 1 weist einen Zylinder 2 auf, in dem eine zylindrische Schecke 3 drehbar gelagert ist. Die Schnecke 3 weist einen zu einem Stirnende des Zylinders 2 hinausragenden Fortsatz 6 auf, dem ein nicht dargestellter Antrieb für die Schnecke 3 zugeordnet ist. Schematisch dargestellt ist eine Halterung 5 für den Zylinder 2, die den Zylinder 2 in horizontaler Ausrichtung relativ zu einem Untergrund oder in zu einem förderseitigen Ende hin abwärts geneigtem Zustand fixiert. Der Zylinder 2 weist eine Einzugszone 7, eine an die Einzugszone 7 in Förderrichtung anschließende Übergangszone 8 sowie eine lediglich abschnittsweise dargestellte Plastifizierzone 9 auf, die in Förderrichtung an die Übergangszone 8 anschließt. Der Zylinder 2 setzt sich in seinem nicht dargestellten Bereich in Richtung zu einem Förderende hin in der Form fort, wie es anhand der Zylinder 2a oder 2b gemäß den Ausführungsformen nach den Fig. 4 und 5 dargestellt ist.

Die Einzugszone 7 ist im Bereich ihrer Oberseite mit einer Einfüllöffnung 4 versehen, die in Richtung einer Mittellängsachse A des Zylinders 2 eine Erstreckung L₂ aufweist. Die Mittellängsachse A entspricht einer Drehachse der zylindrischen Schnecke 3. Die Erstreckung L₂ entspricht einer Länge der Einzugszone 7, da ein wirksamer Einzug von Kunststoffmaterial nur über die parallel zur Förderrichtung der Schnecke 3 erstreckte Länge der Einfüllöffnung 4 möglich ist.

Die Einzugszone 7 ist gegenüber der Plastifizierzone 9 des Zylinders 2 rotationssymmetrisch, vorliegend zylindrisch, aufgeweitet. Die Einzugszone 7 weist einen Nenndurchmesser D₂ auf, der anhand der Fig. 1 und 2 erkennbar ist. Die Plastifizierzone 9 weist einen Nenndurchmesser D₁ auf, der zumindest weitgehend einem Nenndurchmesser der Schnecke 3 entspricht. Der Nenndurchmesser D₂ der Einzugszone 7 ist größer als der Nenndurchmesser D₁ der Plastifizierzone 9, wobei D₂ minus D₁ geteilt durch 2 [(D₂-D₁)/2)] wenigstens um den Faktor 10, vorzugsweise wenigstens um den Faktor 15 oder wenigstens um den Faktor 20, größer ist als ein nicht näher dargestellter Ringspalt zwischen dem Nenndurchmesser der Schnecke 3 und dem Nenndurchmesser der Plastifizierzone 9. (D₂-D₁)/2 entspricht einer Höhe des Ringspalts der Einzugszone 7, wobei die Höhe als Radiale relativ zu der Mittellängsachse A anzusehen ist.

Über eine Länge L₁ - in Richtung der Mittellängsachse A gesehen - erstreckt sich die Übergangszone 8 zwischen der Einzugszone 7 und der Plastifizierzone 9. Die Übergangszone 8 ist konisch gestaltet, wobei die Übergangszone 8 des Zylinders 2 sich ausgehend von der Einzugszone 7 zu der Plastifizierzone 9 hin konisch verjüngt. Anhand der Fig. 1 und 2 ist erkennbar, dass ein Konuswinkel α der konischen Übergangszone 8 als spitzer Winkel von weniger als 45°, vorliegend 10°, gestaltet ist. Die Länge L₁ ergibt sich als Cotangens α mal der Höhe des Ringspalts, d.h. (D₂-D₁)/2.

Die Länge L₂ der Einfüllöffnung 4 erstreckt sich über wenigstens drei Viertel der Länge der Einzugszone 7 und ist vorzugsweise wenigstens um den Faktor 1,5 größer als die Länge L₁ der Übergangszone 8.

Sowohl im Bereich der Plastifizierzone 9 als auch in der Übergangszone 8 ist eine der Schnecke 3 zugewandte Innenwandung der Plastifizierzone 9 und der Übergangszone 8 mit Wendelnuten 10, 11 versehen, die in Richtung der Einzugszone 7 auslaufen. Die Wendelnuten 10 weisen im Bereich der Plastifizierzone 9 eine Tiefe T auf und sind mit einem rechteckigen Nutquerschnitt versehen, der zur Schnecke 3 hin offen ist. Im Bereich der Übergangszone 8 reduziert sich die Tiefe der Wendelnuten 11 allmählich bis auf null, wie den Fig. 1 und 2 gut zu entnehmen ist. Dabei ändert sich der rechteckige Nutquerschnitt zwangsläufig in Richtung der Einzugszone 7 hin zu einem dreieckförmigen Nutquerschnitt. Die Nutquerschnitte der Wendelnuten 10, 11 können alternativ trapezförmig gestaltet sein, wobei sich der Nutquerschnitt zur Mitte des Zylinders 2 und damit zur Schnecke 3 hin öffnet. Die Nuten sind der konischen Übergangszone nachgeführt, indem sich ein Abstand eines Nutgrundes der Wendelnuten 11 von der Plastifizierzone zur Einzugszone hin relativ zu der Mittellängsachse A gesehen vergrößert.

Der Einschneckenextruder 1 nach den Fig. 1 und 2 ist als schnelllaufender Extruder ausgeführt, wobei das nicht dargestellte Antriebssystem im Betrieb des Einschneckenextruders 1 die Schnecke 3 mit einer Umfangsgeschwindigkeit von 0,5 m/s oder mehr antreibt. Ein nicht dargestellter Ringspalt zwischen der Schnecke 3 und der Innenwandung der Plastifizierzone 9 beträgt vorzugsweise zwischen 0,1 und 0,2 mm bei Nenndurchmessern des Zylinders 2 im Bereich der Plastifizierzone 9 zwischen 30 und 70 mm. Der Ringspalt im Bereich der Einzugszone 7 zwischen der Innenwandung der Einzugszone 7 und dem Nenndurchmesser der Schnecke 3 weist eine Höhe von wenigstens 2 mm bei derart dimensionierten Zylindern auf. Ein Zylinder 2 eines Einschneckenextruders 1 mit einem Nenndurchmesser D₁ von 300 mm weist im Bereich der Plastifizierzone 9 einen Ringspalt von etwa 1 mm auf. Im Bereich der Einzugszone 7 sind es bei einem derart dimensionierten Zylinder 2 in entsprechender Weise wenigstens 10 mm, vorzugsweise 15 oder 20 mm als Höhe des Ringspalts. Die Schnecke 3 kann abhängig von einer entsprechenden Auslegung des Antriebssystems des Einschneckenextruders 1 Umfangsgeschwindigkeiten bis zu wenigstens 1,8 m/s im Betrieb des Einschneckenextruders aufweisen.

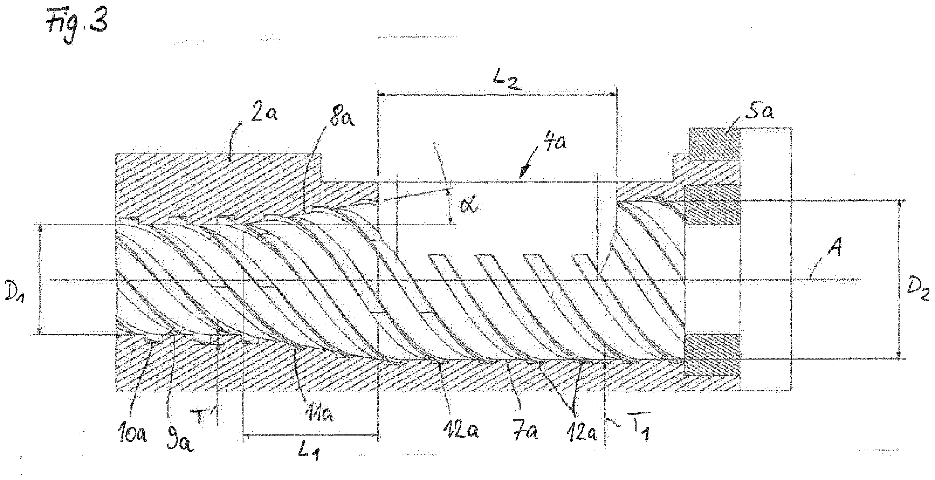

Ein Zylinder 2a gemäß Fig. 3 und 4 für einen Einschneckenextruder ähnlich Fig. 1 entspricht im Wesentlichen dem Zylinder 2 des Einschneckenextruders 1 nach Fig. 1, so dass nachfolgend lediglich auf die Unterschiede des Zylinders 2a gemäß Fig. 3 eingegangen wird. Zur Vermeidung von Wiederholungen wird bezüglich des Zylinders 2a ergänzend auf die Ausführungen zur Ausführungsform gemäß den Fig. 1 und 2 verwiesen. Dem Zylinder 2a ist in gleicher Weise eine zylindrische Schnecke zugeordnet, wie sie in Fig. 1 dargestellt ist. Die Einfüllöffnung 4a der Einzugszone 7a ist identisch gestaltet wie die Einfüllöffnung 4 der Einzugszone 7 und gemäß Fig. 1, wobei beide Einfüllöffnungen 4, 4a zylindrisch ausgeführt sind. Die Länge L₂ entspricht demzufolge einem Durchmesser der Einfüllöffnung 4, 4a. Funktionsgleiche oder identische Abschnitte des Zylinders 2a sind demzufolge mit gleichen Bezugszeichen, zum Großteil unter Hinzufügung des Buchstabens a, versehen.

Wesentlicher Unterschied bei der Ausführungsform gemäß den Fig. 3 und 4 ist es, dass auch die Einzugszone 7a selbst mit Nuten, vorliegend mit Wendelnuten 12a, versehen ist, die ausgehend von der Einzugszone 7a sowohl über die Übergangszone 8a als auch zumindest abschnittsweise in die Plastifizierzone 9a fortgesetzt sind. Querschnitt und Tiefe T der Wendelnuten 10a im Bereich der Plastifizierzone 9a entsprechen den Wendelnuten 10 im Bereich der Plastifizierzone 9 der Ausführungsform nach den Fig. 1 und 2. Im Bereich der Übergangszone 8a weisen die Wendelnuten 11a, die fluchtend an die Wendelnuten 10a anschließen und in einem Arbeitsgang mit den Wendelnuten 10a oder den nachfolgend beschriebenen Wendelnuten 12a hergestellt werden, eine reduzierte Nuttiefe des Nutquerschnitts auf. Diese reduzierte Nuttiefe des Nutquerschnitts T₁ bleibt im Bereich der Einzugszone 7a gleich bezüglich der Wendelnuten 12a, die ebenfalls fluchtend und bündig an die Wendelnuten 11a anschließen. Eine Tiefe T₁ der Wendelnuten 12a ist vorzugsweise um den Faktor 2 geringer als die Tiefe T der Wendelnuten 10a.

Anhand der Fig. 4 ist erkennbar, dass die Wendelnuten 10a sich über eine gesamte Länge des Zylinders 2a zu einem förderseitigen Ende des Zylinders 2a hin erstrecken. Bei der Ausführungsform des Zylinders 2b gemäß Fig. 5 hingegen erstrecken die Wendelnuten 10b sich lediglich über die Plastifizierzone 9b. In den in Förderrichtung anschließenden Zonen des Zylinders 2b hingegen sind keine Nuten im Bereich der Innenwandung des Zylinders 2b vorgesehen. Die Nuten, wie sie vorliegend beschrieben wurden, können entweder direkt in entsprechende Innenwandungen des jeweiligen Zylinders 2, 2a, 2b eingebracht werden oder sie sind in eine separat hergestellte Nutbuchse eingebracht, die axial in einen entsprechenden Zylinderabschnitt des Zylinders 2, 2a, 2b eingefügt ist und so die entsprechende Innenwandung des Zylinders 2, 2a, 2b bildet. Eine derartige Nutbuchse bildet vorzugsweise lediglich einen an die Übergangszone anschließenden Bereich der Plastifizierzone, sowie die Übergangszone und die Einzugszone. Eine entsprechende Nutbuchse kann analog der DE 199 28 870 A1 (dort insbesondere Fig. 1a und 1b und zugehörige Beschreibung) eingebracht und in dem Zylinder fixiert sein. Entsprechend axial in Förderrichtung daran anschließende Zonen des Zylinders sind im Bereich der Innenwandung des Zylinders nicht genutet.

## Patentansprüche

1. Einschneckenextruder zur Kunststoffplastifizierung mit einem Zylinder (2, 2a, 2b) und mit einer zylindrischen Schnecke (3), die in dem Zylinder (2, 2a, 2b) drehbar gelagert ist, wobei der Zylinder (2, 2a, 2b) eine Einzugszone (7, 7a, 7b) für eine Zufuhr von zu plastifizierendem Kunststoffmaterial und eine in Förderrichtung hinter der Einzugszone (7, 7a, 7b) angeordnete Plastifizierzone (9, 9a, 9b) aufweist, wobei die Einzugszone (7, 7a, 7b) gegenüber der Plastifizierzone (9, 9a, 9b) derart rotationssymmetrisch aufgeweitet ist, dass zwischen einer Wandung der Einzugszone (7, 7a, 7b) und einem Nenndurchmesser der Schnecke (3) ein Ringspalt vorgesehen ist, **dadurch gekennzeichnet, dass** der Ringspalt wenigstens um den Faktor 10 größer ist als ein Ringspalt zwischen einer Wandung der Plastifizierzone (9, 9a, 9b) und dem Nenndurchmesser der Schnecke (3), und dass zwischen der Einzugszone (7, 7a, 7b) und der Plastifizierzone (9, 9a, 9b) des Zylinders (2, 2a, 2b) eine sich zur Plastifizierzone (9, 9a, 9b) hin konisch verjüngende Übergangszone (8, 8a, 8b) vorgesehen ist, deren Wandung zumindest abschnittsweise mit Nuten (11, 11a) versehen ist, die der konischen Verjüngung nachgeführt sind.

2. Einschneckenextruder nach Anspruch 1, **dadurch gekennzeichnet, dass** die Schnecke (3) im Betrieb des Einschneckenextruders (1) eine Umfangsgeschwindigkeit von mehr als 0,5 Meter pro Sekunde (m/s) aufweist.

3. Einschneckenextruder nach einem der vorhergehenden Ansprüche, **dadurch gekennzeichnet, dass** die Wandung der Einzugszone (7a, 7b) zumindest abschnittsweise mit Nuten (12a) versehen ist.

4. Einschneckenextruder nach einem der vorhergehenden Ansprüche, **dadurch gekennzeichnet, dass** die Wandung der Plastifizierzone (9, 9a, 9b) zumindest abschnittsweise mit Nuten (10,10a, 10b) versehen ist.

5. Einschneckenextruder nach einem der vorhergehenden Ansprüche, **dadurch gekennzeichnet, dass** die Nuten als Axialnuten oder als Wendelnuten ausgeführt sind.

6. Einschneckenextruder nach Anspruch 5, **dadurch gekennzeichnet, dass** die Wendelnuten entgegengerichtet zu einer Wendelung der Schnecke (3) gewendelt sind.

7. Einschneckenextruder nach Anspruch 5 oder 6, **dadurch gekennzeichnet, dass** die Wendelnuten eine betragsmäßig zu einer Schneckensteigung unterschiedliche oder gleiche Steigung aufweisen.

8. Einschneckenextruder nach einem der vorhergehenden Ansprüche, **dadurch gekennzeichnet, dass** die Nuten in der Übergangszone (8, 8a, 8b) sich in Förderrichtung der Schnecke vertiefende Nutquerschnitte aufweisen.

9. Einschneckenextruder nach einem der vorhergehenden Ansprüche, **dadurch gekennzeichnet, dass** die Nuten trapez- oder rechteckförmige Nutquerschnitte aufweisen.

10. Einschneckenextruder nach einem der Ansprüche 1 bis 8, **dadurch gekennzeichnet, dass** die Nuten zumindest abschnittsweise runde Nutquerschnitte aufweisen.

11. Einschneckenextruder nach Anspruch 1, **dadurch gekennzeichnet, dass** eine Länge der Übergangszone (8, 8a, 8b) wenigstens einem Viertel eines Nenndurchmessers der Schnecke (3) entspricht.

## Claims

1. Single-screw extruder for plasticizing plastics, having a cylinder (2, 2a, 2b) and having a cylindrical screw (3) which is rotatably mounted in the cylinder (2, 2a, 2b), wherein the cylinder (2, 2a, 2b) has a feed zone (7, 7a, 7b) for a supply of plastic material to be plasticized and a plasticizing zone (9, 9a, 9b) arranged downstream of the feed zone (7, 7a, 7b) in the conveying direction, wherein the feed zone (7, 7a, 7b) is widened rotationally symmetrically relative to the plasticizing zone (9, 9a, 9b) such that an annular gap is provided between a wall of the feed zone (7, 7a, 7b) and a nominal diameter of the screw (3), **characterized in that** the annular gap is at least 10 times larger is larger than an annular gap between a wall of the plasticizing zone (9, 9a, 9b) and the nominal diameter of the screw (3), and that between the feed zone (7, 7a, 7b) and the plasticizing zone (9, 9a, 9b) of the cylinder (2, 2a, 2b) a transition zone (8, 8a, 8b) conically tapering towards the plasticizing zone (9, 9a, 9b) is provided, the wall of which is provided at least in sections with grooves (11, 11a) which track the conical taper.

2. Single-screw extruder according to Claim 1, **characterized in that** the screw (3) has a peripheral speed of more than 0.5 meters per second (m/s) when the single-screw extruder (1) is in operation.

3. Single-screw extruder according to one of the preceding claims, **characterized in that** the wall of the feed zone (7a, 7b) is provided with grooves (12a) at least in sections.

4. Single-screw extruder according to one of the preceding claims, **characterized in that** the wall of the plasticizing zone (9, 9a, 9b) is provided with grooves (10, 10a, 10b) at least in sections.

5. Single-screw extruder according to one of the preceding claims, **characterized in that** the grooves are implemented as axial grooves or as helical grooves.

6. Single-screw extruder according to Claim 5, **characterized in that** the helical grooves are spiralled in the opposite direction to a spiral of the screw (3).

7. Single-screw extruder according to Claim 5 or 6, **characterized in that** the helical grooves have a pitch that is different from or the same as a screw pitch in terms of absolute value.

8. Single-screw extruder according to one of the preceding claims, **characterized in that** the grooves in the transition zone (8, 8a, 8b) have groove cross-sections which deepen in the conveying direction of the screw.

9. Single-screw extruder according to one of the preceding claims, **characterized in that** the grooves have trapezoidal or rectangular groove cross-sections.

10. Single-screw extruder according to one of Claims 1 to 8, **characterized in that** the grooves have round groove cross-sections at least in sections.

11. Single-screw extruder according to Claim 1, **characterized in that** a length of the transition zone (8, 8a, 8b) corresponds to at least a quarter of a nominal diameter of the screw (3).

## Revendications

1. Extrudeuse à une vis pour la plastification de matière plastique avec un cylindre (2, 2a, 2b) et une vis sans fin cylindrique (3) qui est montée dans le cylindre (2, 2a, 2b) en étant rotative, sachant que le cylindre (2, 2a, 2b) comprend une zone d'alimentation (7, 7a, 7b) en matière plastique à plastifier et une zone de plastification (9, 9a, 9b) disposée dans le sens du transport derrière la zone d'alimentation (7, 7a, 7b), sachant que la zone d'alimentation (7, 7a, 7b) est élargie en symétrie de révolution par rapport à la zone de plastification (9, 9a, 9b), de telle sorte qu'une fente annulaire est prévue entre une paroi de la zone d'alimentation (7, 7a, 7b) et un diamètre nominal de la vis sans fin (3), **caractérisée en ce que** la fente annulaire est au moins 10 fois plus grande qu'une fente annulaire entre une paroi de la zone de plastification (9, 9a, 9b) et le diamètre nominal de la vis sans fin (3), et, qu'entre la zone d'alimentation (7, 7a, 7b) et la zone de plastification (9, 9a, 9b) du cylindre (2, 2a, 2b), il est prévu une zone de transition (8, 8a, 8b) se rétrécissant de manière conique en direction de la zone de plastification (9, 9a, 9b) et dont la paroi est pourvue, au moins sur certaines sections, de rainures (11, 11a) qui suivent le rétrécissement conique.

2. Extrudeuse à une vis selon la revendication 1, **caractérisée en ce que** la vis sans fin (3) présente une vitesse périphérique supérieure à 0,5 mètre par seconde (m/s) lorsque l'extrudeuse à une vis (1) est en mode de fonctionnement.

3. Extrudeuse à une vis selon l'une des revendications précédentes, **caractérisée en ce que** la paroi de la zone d'alimentation (7a, 7b) est pourvue de rainures (12a) au moins sur certaines sections.

4. Extrudeuse à une vis selon l'une des revendications précédentes, **caractérisée en ce que** la paroi de la zone de plastification (9, 9a, 9b) est pourvue de rainures (10, 10a, 10b) au moins sur certaines sections.

5. Extrudeuse à une vis selon l'une des revendications précédentes, **caractérisée en ce que** les rainures sont des rainures axiales ou des rainures hélicoïdales.

6. Extrudeuse à une vis selon la revendication 5, **caractérisée en ce que** les rainures hélicoïdales sont hélicoïdales dans le sens opposé d'une hélice de la vis sans fin (3).

7. Extrudeuse à une vis selon la revendication 5 ou 6, **caractérisée en ce que** les rainures hélicoïdales présentent un pas différent ou identique en valeur à un pas de vis sans fin.

8. Extrudeuse à une vis selon l'une des revendications précédentes, **caractérisée en ce que** les rainures dans la zone de transition (8, 8a, 8b) présentent des sections de rainures s'approfondissant dans le sens de transport de la vis sans fin.

9. Extrudeuse à une vis selon l'une des revendications précédentes, **caractérisée en ce que** les rainures présentent des sections de rainures trapézoïdales ou rectangulaires.

10. Extrudeuse à une vis selon l'une des revendications 1 à 8, **caractérisée en ce que** les rainures présentent, au moins par sections, des sections de rainures rondes.

11. Extrudeuse à une vis selon la revendication 1, **caractérisée en ce qu'**une longueur de la zone de transition (8, 8a, 8b) correspond au moins à un quart d'un diamètre nominal de la vis sans fin (3).
